# FASCICULE DE BREVET EUROPEEN

(11) **EP 1 153 769 B1**
(45) Date de publication et mention de la délivrance du brevet: **13.06.2007**
(21) Numéro de dépôt: 01400964.1
(22) Date de dépôt: 13.04.2001
(51) Int. Cl.: B60C 17/04

(54) **Dispositif de roulage à plat pour véhicule automobile**
Notlaufvorrichtung für Fahrzeuge
Run-flat device for automotive vehicle

(30) Priorité: 11.05.2000 FR 0005998
(43) Date de publication de la demande: 14.11.2001
(73) Titulaire: HUTCHINSON, 75008 Paris (FR)
(72) Inventeur: Heuze, Olivier, 95290 L'Isle Adam (FR); Michelot, Eric, 95000 Cergy (FR); Pelletier, Bruno, 95340 Persan (FR)
(74) Mandataire: Bolinches, Michel Jean-Marie

(56) Documents cités:
- DE-B- 1 176 013
- FR-A- 796 666
- FR-A- 2 256 847
- US-A- 4 270 592
- US-A- 4 922 981
- US-A- 5 626 696
- PATENT ABSTRACTS OF JAPAN vol. 016, no. 007 (M-1198), 9 janvier 1992 (1992-01-09) & JP 03 231007 A (BRIDGESTONE CORP), 15 octobre 1991 (1991-10-15)

## Description

L'invention concerne un dispositif de roulage à plat pour véhicule automobile, permettant de parcourir une distance importante à vitesse relativement élevée avec un pneumatique sans chambre à air partiellement ou totalement dégonflé.

D'une manière générale, pour équiper les véhicules du secteur civil, les dispositifs de roulage à plat doivent pouvoir être montés sur des jantes de roue standard, c'est-à-dire des jantes monoblocs à creux de jante (ou « drop center » en langue anglaise).

Les dispositifs de roulage à plat connus actuellement sont généralement constitués par un anneau de roulage qui est monté serré autour de la jante de roue à l'intérieur du pneumatique. Cet anneau est formé soit d'une seule pièce relativement souple à laquelle on a retiré une tranche, soit d'au moins deux pièces rigides en arc de cercle ou secteurs. Pour assurer un montage serré de l'anneau autour de la jante, il est nécessaire de prévoir une connectique d'assemblage et de serrage entre les deux extrémités libres de l'anneau fendu ou entre les extrémités en vis-à-vis des secteurs de l'anneau. Les connectiques d'assemblage et de serrage sont rigides et constitués d'éléments mécaniques tels que vis-écrou par exemple.

Or, l'expérience montre que ces connectiques rigides sont l'élément fragile des dispositifs de roulage à plat (phénomènes de fatigue par exemple). Par ailleurs, le montage d'un dispositif de roulage à plat est une opération qui nécessite une formation de l'opérateur compte tenu notamment de l'espace réduit pour le passage de l'outil nécessaire au serrage de l'anneau sur la jante.

Un dispositif de roulage à plat correspondant au préambule de la revendication 1 est divulgué dans le document US-5626696.

Selon le document FR-97 13618 au nom de la Demanderesse, le dispositif de roulage à plat est constitué de manière à supprimer la connectique d'assemblage et de serrage. Il comprend au moins un anneau interne ouvert en matière relativement rigide, destiné à être monté sur la jante, et un anneau extérieur continu et sensiblement inextensible, emboîté sur le précédent pour le serrer et le fixer sur la jante.

Selon un perfectionnement envisagé dans le document FR-98 04225, également au nom de la Demanderesse, l'anneau est constitué de trois pièces, à savoir : deux premières pièces annulaires, ouvertes sur une tranche et destinées à être montées l'une sur l'autre autour de la jante, et une troisième pièce annulaire continue et coaxiale aux deux précédentes, cette troisième pièce assurant le serrage sur la jante du système ainsi formé.

Un but de l'invention est de s'affranchir notamment des problèmes posés par les connectiques d'assemblage et de serrage entre les deux extrémités libres de l'anneau ou des secteurs de l'anneau.

A cet effet, l'invention propose un dispositif de roulage à plat pour véhicule automobile, ce dispositif comprenant un anneau destiné à être monté à l'intérieur d'un pneumatique sur une jante non standard de roue en une seule pièce et qui présente un creux de jante spécifique et deux rebords de jante interne et externe, ledit anneau étant réalisé en au moins deux secteurs présentant chacun une zone radialement interne et une zone radialement externe, dispositif qui est caractérisé en ce que les secteurs de l'anneau sont indépendants les uns des autres, et en ce que chaque secteur est fixé à la jante au niveau de sa zone radialement interne.

D'une manière générale, la zone radialement interne de chaque secteur de l'anneau se termine par une semelle en arc de cercle qui est destinée à prendre appui sur le fond du creux de jante, ladite semelle étant formée par deux rebords latéraux interne et externe, le rebord interne venant se loger dans une gorge latérale délimitée par le creux de jante alors que le rebord externe, qui épouse le profil du creux de jante, coopère avec les moyens de fixation du secteur de l'anneau sur la jante.

Selon l'invention, chaque secteur de l'anneau est rendu solidaire de la jante de roue au moyen de vis ou au moyen d'une ceinture de serrage.

Dans un premier mode de réalisation de l'invention, on utilise des vis de fixation qui traversent le rebord externe de la semelle de chaque secteur de l'anneau pour pénétrer dans des trous borgnes filetés usinés dans l'épaisseur de la jante de roue à partir du fond du creux de jante.

Avantageusement, les trous borgnes filetés sont usinés obliquement dans l'épaisseur de la jante pour faciliter les opérations de vissage.

Dans un second mode de réalisation de l'invention, on utilise des vis de fixation qui traversent des trous filetés usinés latéralement dans la jante et qui débouchent dans le creux de jante jusqu'à venir en appui serré sur la face externe des secteurs de l'anneau.

Par ailleurs, les rebords internes des semelles des secteurs de l'anneau prennent appui sur un joint torique placé dans la gorge latérale du creux de jante et destiné à reprendre les tolérances latérales des différentes pièces de l'ensemble, alors que chaque vis de fixation présente une tête élargie qui prend appui sur la jante par l'intermédiaire d'une bague d'étanchéité.

Dans un troisième mode de réalisation de l'invention, les moyens de fixation des secteurs de l'anneau sur la jante, sont constitués par une ceinture de serrage qui entoure les rebords externes des secteurs de l'anneau.

D'autres avantages, caractéristiques et détails de l'invention ressortiront du complément de description qui va suivre en référence aux dessins annexés, donnés uniquement à titre d'exemple et dans lesquels :
- la figure 1 est une demi-vue en coupe axiale d'un premier mode de réalisation d'un dispositif de roulage à plat selon l'invention,
- la figure 2 est une demi-vue en coupe axiale d'un deuxième mode de réalisation d'un dispositif de roulage à plat selon l'invention,
- la figure 3 est une demi-vue en coupe axiale d'un troisième mode de réalisation d'un dispositif de roulage à plat selon l'invention, et
- les figures 4a et 4b sont des vues de côté partielles du détail indiqué par la flèche IV sur la figure 3.

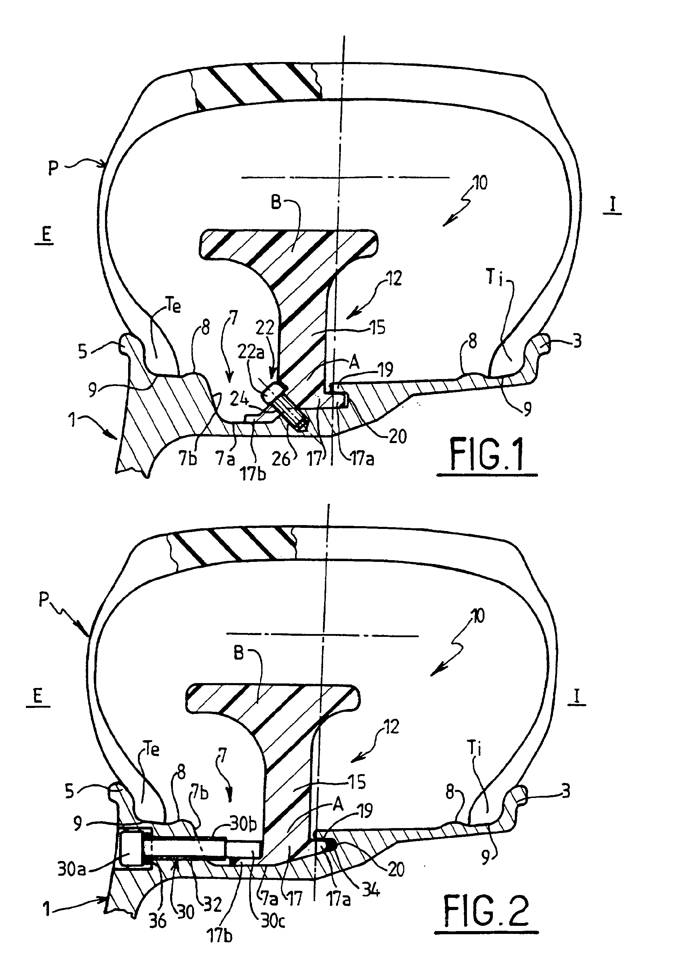

On se réfère d'abord à la figure 1 pour décrire succinctement une jante non standard 1 d'une roue de véhicule automobile autour de laquelle on va monter un dispositif de roulage à plat selon l'invention.

La jante 1 est une pièce annulaire monobloc ou d'un seul tenant qui présente notamment et d'une façon connue en soi :
- deux rebords périphériques interne 3 et externe 5 ou rebords de jante,
- un creux de jante 7 dans sa partie centrale (ou « drop center » en langue anglaise), et
- deux bossages périphériques 8 (ou « hump » en langue anglaise), qui sont respectivement adjacents aux deux rebords périphériques 3 et 5 pour former deux puits 9 destinés à recevoir les deux talons Tᵢ et Tₑ du pneumatique P.

Dans la suite du texte descriptif, on utilisera les adjectifs interne et externe en faisant référence aux côtés interne I et externe E de la jante 1 ou du pneumatique P.

D'une manière générale, le dispositif de roulage à plat 10 selon l'invention est constitué par un anneau rigide 12 qui est scindé en au moins deux éléments en arc de cercle ou secteurs 15. Les secteurs 15 de l'anneau 12 sont indépendants les uns des autres et rapportés séparément autour de la jante 1 sans aucune connectique de liaison pour assembler les deux secteurs entre eux. Avantageusement, l'anneau 12 est fabriqué d'une seule pièce puis scindé en plusieurs secteurs avec un outil de coupe, une scie par exemple, pour limiter au maximum le jeu qui pourrait exister entre les secteurs une fois qu'ils sont rapportés autour de la jante.

Le nombre des secteurs 15 de l'anneau 12 peut varier notamment en fonction des dimensions relatives de l'anneau 12 par rapport à celles du pneumatique P. L'anneau 12 peut être fabriqué en aluminium, mais de préférence en une matière plastique du type polyamide éventuellement chargée de fibres de verre par exemple pour renforcer sa tenue mécanique et thermique. Chaque secteur 15 de l'anneau 12 peut comporter sur sa périphérie extérieure un revêtement de caoutchouc souple formant une bande de roulement, en particulier lorsque les secteurs 15 sont en aluminium.

Chaque secteur 15 de l'anneau 12 présente une partie centrale ou poutre, une zone radialement interne A et une zone radialement externe B dont la périphérie forme la surface de roulage à plat sur laquelle vient prendre appui la bande de roulement du pneumatique P et qui forme une excroissance, côté extérieur, pour éviter le débattement latéral du pneumatique P. Le creux de jante 7 est une cavité qui est délimitée par un fond 7a, une paroi latérale externe 7b, et une paroi latérale interne qui présente un rebord périphérique 19 qui permet de délimiter une gorge latérale 20 avec le fond 7a du creux de jante 7. La zone radialement interne A de chaque secteur 15 se termine par une semelle 17 en arc de cercle qui est formée par deux rebords latéraux interne 17a et externe 17b qui s'étendent de part et d'autre de la partie centrale du secteur 15. La largeur de cette semelle 17, y compris celle des rebords latéraux 17a et 17 b est bien inférieure à la largeur du creux de jante 7 pour des raisons liées au montage du pneumatique P sur la jante 1, comme explicité ci-après.

Au montage, on monte partiellement le pneumatique P autour de la jante 1 de manière à positionner le talon intérieur Tᵢ du pneumatique P juste après le creux de jante 7, alors que son talon externe Tₑ reste situé à l'extérieur de la jante 1 de manière à pouvoir introduire les secteurs 15 à l'intérieur du pneumatique P. On rapporte chaque secteur 15 sur la jante 1 en introduisant sa semelle 17 dans le creux de jante 7, puis on le pousse latéralement de manière à ce que le rebord latéral interne 17a de sa semelle 17 pénètre dans la gorge latérale 20 du creux de jante 7.

Ensuite, on vient appliquer un gel lubrifiant sur le profil intérieur de la bande de roulement du pneumatique P pour réduire la friction avec la périphérie de l'anneau 12 en cas de roulage à plat.

On monte ensuite le talon externe Tₑ du pneumatique P sur la jante 1, ce qui est possible du fait que la semelle 17 des secteurs 15 n'occupe qu'une partie du volume de la cavité formée par le creux de jante 7 pour laisser ainsi suffisamment d'espace pour le montage du talon externe Tₑ. En effet, si la semelle 17 remplissait le creux de jante 7, on ne pourrait pas monter le talon externe Tₑ du pneumatique P.

Les deux secteurs semi-cylindriques 15 sont fixés au moyen de six vis 22 par exemple. Chaque vis 22 est vissée dans un trou 24 qui traverse le rebord latéral externe 17b d'un secteur 15 pour pénétrer dans un trou borgne 26 correspondant de la jante 1 jusqu'à ce que la tête de vis 22a vienne en appui sur la semelle 17. A cet effet, on écarte le talon externe Tₑ du pneumatique P pour dégager l'un après l'autre les trous 24 et 26 de manière à créer un espace suffisant pour permettre à un opérateur de procéder à la fixation des secteurs 15 de l'anneau 12 sur la jante 1. D'une manière générale, les trous 24 et 26 sont percés suivant une certaine inclinaison pour faciliter le montage des vis 22. Avantageusement, un système de centrage des secteurs 15 est utilisé pour placer correctement les trous 24 qui traversent le rebord externe 17b en face des trous borgnes 26 de la jante 1.

Enfin, on gonfle le pneumatique P de manière à ce que ses deux talons Tᵢ et Tₑ se positionnent dans leurs puits respectifs 9 de la jante 1 en se calant du fait de la pression sur les rebords de jante 3 et 5.

Ainsi, les secteurs 15 de l'anneau 12 sont bloqués en position tant latéralement que verticalement. Le blocage latéral est assuré au moyen des vis de fixation 22, alors que le blocage vertical est assuré au moyen des vis 22 d'une part et de la gorge latérale 20 du creux de jante 7 d'autre part.

Il est important de noter, une fois les secteurs 15 fixés sur la jante 1 :
- que le rebord latéral interne 17a des semelles 17 des secteurs 15 n'est pas en contact avec le fond de la gorge latérale 20 du creux de jante 7, et
- que le rebord 19 de la jante 1 qui délimite la gorge latérale 20 du creux de jante 7 n'est pas en contact avec les secteurs 15, ces jeux permettant d'obtenir un appui franc des semelles 17 des secteurs 15 sur le fond 7a du creux de jante 7.

Selon ce premier mode de réalisation, il est clair que la jante 1 doit présenter une épaisseur suffisante pour usiner les trous borgnes 26. En effet, une solution consistant à percer de part en part la jante 1 conduirait à prendre des précautions quant à l'étanchéité de la jante 1, bien que cela puisse être envisagé.

D'une manière générale, les vis 22 sont plus ou moins grosses, leur nombre et leur couple de serrage est également variable et ce, en fonction notamment de la vitesse maximale du véhicule automobile.

Dans un deuxième mode de réalisation qui est illustré sur la figure 2, l'anneau 12 présente globalement les mêmes caractéristiques que celui illustré sur la figure 1, puisque les secteurs 15 sont également fixés sur la jante 1 au moyen de vis, mais ces vis 30 sont montées différemment et ne pénètrent pas dans les secteurs de l'anneau.

La jante 1 est traversée par des trous filetés 32 qui sont usinés depuis la face externe de la jante 1 et de manière à déboucher dans le creux de jante 7 au niveau de sa paroi latérale externe 7b.

Le montage du pneumatique P et des secteurs 15 de l'anneau 12 se fait globalement de la même manière que celle envisagée dans le premier mode de réalisation avec cependant une différence.

En effet, avant de positionner les secteurs 15 autour de la jante 1, on introduit un joint torique 34, en caoutchouc par exemple, dans la gorge latérale 20 du creux de jante 7.

Avantageusement, les vis 30 utilisées sont des vis à téton qui présentent une tête élargie 30a prolongée par une tige 30b qui n'est filetée que sur une partie de sa longueur, son extrémité non filetée formant un téton d'appui 30c qui permet le contact avec le rebord latéral externe 17b sans l'abîmer.

Chaque vis 30 est engagée dans un trou 32 de la jante 1 et vissée jusqu'à obtenir un couple de serrage fixé. Alors, l'extrémité de son téton 30c vient en appui sur la face externe de la poutre des secteurs 15, à un niveau situé au-dessus du rebord latéral externe 17b des semelles 17, tout en comprimant le joint torique 34 dans le fond de la gorge latérale 20 du creux de jante 7. La tête 30a de chaque vis 30 vient en appui sur la jante 1 en comprimant une bague 36 destinée à assurer l'étanchéité. Pour que cette bague 36 remplisse sa fonction, la longueur de chaque vis 30 est prédéterminée, sachant que le joint 34 placé dans la gorge latérale 20 du creux de jante 7 a pour fonction d'assurer la reprise des tolérances de fabrication.

Comme dans le cas du premier mode de réalisation, les secteurs 15 de l'anneau 12 sont bloqués en position tant latéralement que verticalement. Le blocage latéral est assuré au moyen des vis 30 et du joint 34, alors que le blocage vertical est assuré au moyen des vis 30 d'une part et de la gorge latérale 20 du creux de jante 7 d'autre part.

Il est important de noter, une fois les secteurs 15 fixés sur la jante 1, que le rebord 19 de la jante 1 qui délimite la gorge latérale 20 du creux de jante 7 n'est pas en contact avec les secteurs 15. La présence d'un jeu permet aux joints 34 et 36 de se comprimer librement.

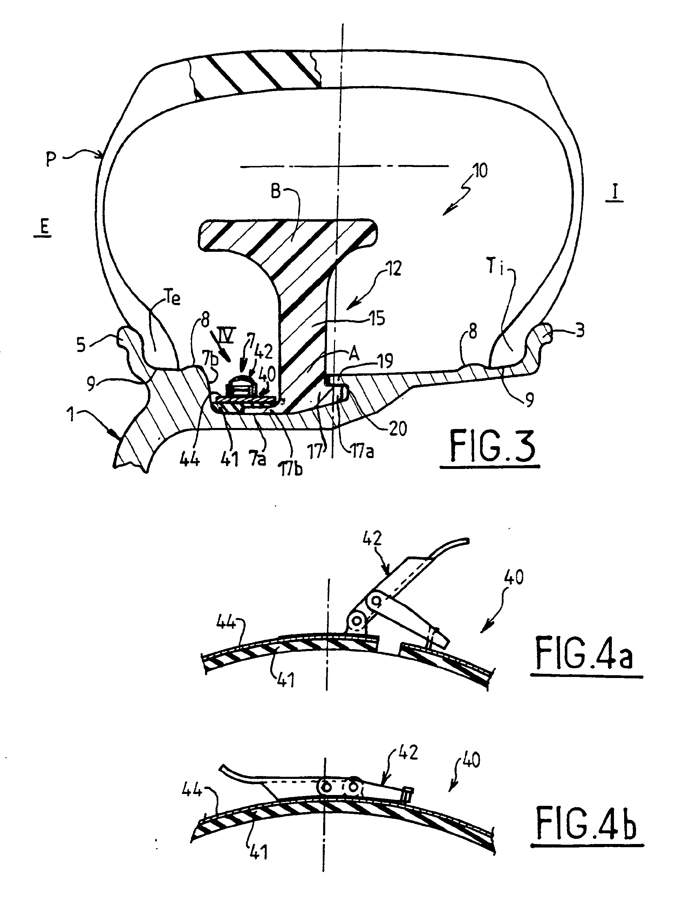

Dans un troisième mode de réalisation illustré sur la figure 3, les secteurs 15 de l'anneau 12 ne sont pas fixés à la jante 1 au moyen de vis, mais par l'intermédiaire d'une ceinture de serrage 40 qui est rapportée autour des rebords latéraux externes 17b des semelles 17 des secteurs 15.

La ceinture de serrage 40 est réalisée en une matière souple telle que du caoutchouc pour sa partie radiale interne 41 et un ruban métallique 44 pour sa partie radiale externe. Ses deux extrémités libres sont reliées l'une à l'autre par un dispositif de blocage 42 du type à grenouillère, connu en soi, qui est illustré sur la figure 4a en position intermédiaire et sur la figure 4b en position fermée.

Avantageusement, le ruban métallique 44 est rapporté sur le caoutchouc 41 par collage à froid ou à chaud, et dont la largeur est inférieure à celle de la partie caoutchouc pour éviter qu'il n'entre en contact d'une part avec les secteurs 15 de l'anneau 12 et d'autre part avec la paroi latérale externe 7b du creux de jante 7. Le dispositif de blocage 42 à grenouillère est soudé par points sur le ruban métallique 44 par exemple.

La largeur de la ceinture de serrage 40 est telle que ses deux bords périphériques en caoutchouc viennent respectivement en contact avec la paroi externe 7b du creux de jante 7 et la face externe des secteurs 15 de l'anneau 12 en enveloppant les semelles 17. Par ailleurs, la largeur du creux de jante 7 est plus importante que celle des modes de réalisation précédents pour pouvoir y loger la ceinture de serrage 40. Au montage, on peut noter que les rebords latéraux internes 17a des semelles 17 des secteurs 15 sont poussés dans la gorge latérale 20 du creux de jante 7, de telle sorte que le rebord 19 de la jante 1, qui délimite la gorge 20, vienne en contact avec la face interne des secteurs 15 de l'anneau 12.

Comme dans les modes de réalisation précédents, les secteurs 15 de l'anneau 12 sont bloqués en position tant latéralement que verticalement. Le blocage latéral est assuré par les contacts du système 12 avec le rebord 19 de la jante et la paroi externe 7b du creux de jante 7, alors que le blocage vertical est assuré par la sangle 40 et la gorge latérale 20.

D'une manière générale, l'excroissance de l'anneau 12 a pour objet de limiter les débattements latéraux du pneumatique P, de conserver une bonne motricité en maintenant le talon Tₑ du pneumatique sur son puits 9 et d'assurer une meilleure tenue de route du véhicule en roulage à plat ou à l'état sous-gonflé du pneumatique P.

Dans les modes de réalisation des figures 1 à 3, l'excroissance de l'anneau 12 s'étend du côté externe E jusqu'à venir sensiblement à la verticale du bossage périphérique externe 8 de la jante 1.

## Revendications

1. Dispositif de roulage à plat pour véhicule automobile, ce dispositif comprenant un anneau (12) destiné à être monté à l'intérieur d'un pneumatique (P) sur une jante de roue non standard (1) en une seule pièce et qui présente un creux de jante (7) et deux rebords interne (3) et externe (5), ledit anneau (12) étant réalisé en au moins deux secteurs (15) présentant chacun une zone radialement interne (A) et une zone radialement externe (B), **caractérisé en ce que** les secteurs (15) de l'anneau (12) sont indépendants les uns des autres, et **en ce que** chaque secteur (15) est fixé à la jante (1) au niveau de sa zone radialement interne (A).

2. Dispositif de roulage à plat selon la revendication 1 , **caractérisé en ce que** la zone radialement interne (A) de chaque secteur (15) de l'anneau (12) se termine par une semelle (17) en arc de cercle qui est destinée à prendre appui sur le fond (7a) du creux de jante (7), et **en ce que** ladite semelle (17) présente deux rebords latéraux interne (17a) et externe (17b), le rebord interne (17a) venant se loger dans une gorge latérale (20) du creux de jante (7) alors que le rebord externe (17b), qui épouse le profil du creux de jante (7), coopère avec les moyens de fixation du secteur (15) de l'anneau sur la jante.

3. Dispositif de roulage à plat selon la revendication 2, **caractérisé en ce que** chaque secteur (15) de l'anneau est fixé à la jante de roue au moyen de vis (22).

4. Dispositif de roulage à plat selon la revendication 3, **caractérisé en ce que** les vis de fixation (22) traversent le rebord externe (17b) de la semelle (17) de chaque secteur (15) de l'anneau (12) et pénètrent dans des trous borgnes filetés (26) usinés dans l'épaisseur de la jante (1) de roue à partir du fond (7a) du creux de jante (7).

5. Dispositif de roulage à plat selon la revendication 4, **caractérisé en ce que** les trous borgnes filetés (26) sont usinés obliquement dans l'épaisseur de la jante (1) pour faciliter les opérations de vissage.

6. Dispositif de roulage à plat selon l'une quelconque des revendications 3 à 5, **caractérisé en ce que** chaque secteur (15) de l'anneau (12) est bloqué latéralement au moyen des vis de fixation (22) , et est bloqué verticalement par l'intermédiaire des vis de fixation (22) et de la gorge (20) du creux de jante (7).

7. Dispositif de roulage à plat selon la revendication 3, **caractérisé en ce que** des vis de fixation (30) traversent des trous filetés (32) usinés latéralement dans la jante (1) et qui débouchent dans le creux de jante (7) jusqu'à venir en appui serré sur la face externe de la poutre de chaque secteur (15) de l'anneau.

8. Dispositif de roulage à plat selon la revendication 7, **caractérisé en ce que** les vis de fixation (30) sont des vis à téton.

9. Dispositif de roulage à plat selon la revendication 7 ou 8, **caractérisé en ce que** les rebords internes (17a) des semelles (17) des secteurs (15) de l'anneau prennent appui sur un joint torique (34) placé dans la gorge latérale (20) du creux de jante (7).

10. Dispositif de roulage à plat selon l'une quelconque des revendications 7 à 9, **caractérisé en ce que** chaque vis de fixation (30) présente une tête élargie (30a) qui prend appui sur la jante (1) par l'intermédiaire d'une bague d'étanchéité (36).

11. Dispositif de roulage à plat selon la revendication 9 ou 10, **caractérisé en ce que** chaque secteur (15) de l'anneau (12) est bloqué latéralement par les vis de fixation (30) et le joint torique (34), et est bloqué verticalement par l'intermédiaire des vis de fixation (30) et par la gorge latérale (20).

12. Dispositif de roulage à plat selon la revendication 2, **caractérisé en ce que** les moyens de fixation des secteurs (15) de l'anneau (12) sur la jante (1), sont constitués par une ceinture de serrage (40).

13. Dispositif de roulage à plat selon la revendication 12, **caractérisé en ce que** la ceinture de serrage (40) vient se monter dans le creux de jante (7) pour entourer les rebords externes (17b) des secteurs (15) de l'anneau (12).

14. Dispositif de roulage à plat selon la revendication 12 ou 13, **caractérisé en ce que** la ceinture de serrage (40) est réalisée en une matière telle que du caoutchouc par exemple pour sa partie radialement interne (41), et est recouverte d'un ruban métallique (44) collé dont la largeur est inférieure à celle de la partie caoutchouc (41) de la ceinture de serrage (40).

15. Dispositif de roulage à plat selon l'une quelconque des revendications 12 à 14, **caractérisé en ce que** les deux extrémités libres de la ceinture de serrage (40) sont réunies l'une à l'autre au moyen d'un dispositif de blocage (42) de type à grenouillère.

## Claims

1. A runflat device for a motor vehicle, the device comprising a ring (12) for mounting inside a tire (P) on a one-piece non-standard wheel rim (1) that presents a drop center (7), an inner flange (7) and an outer flange (5), said ring (12) being made as at least two sectors (15) each having a radially inner zone (A) and a radially outer zone (B), the device being **characterized in that** the sectors (15) of the ring (12) are independent of one another, and **in that** each sector (15) is fixed to the rim (1) via its radially inner zone (A).

2. A runflat device according to claim 1, **characterized in that** the radially inner zone (A) of each sector (15) of the ring (12) is terminated by a circularly arcuate footing (17) designed to bear against the bottom (7a) of the drop center (7), and **in that** said footing (17) presents an inner lateral flange (17a) and an outer lateral flange (17b), the inner flange (17a) being received in a lateral groove (20) in the drop center (7) while the outer flange (17b) matches the profile of the drop center (7) and co-operates with the means for fixing the sector (15) of the ring on the rim.

3. A runflat device according to claim 2, **characterized in that** each sector (15) of the ring is fixed to the wheel rim by means of screws (22).

4. A runflat device according to claim 3, **characterized in that** the fixing screws (22) pass through the outer flange (17b) of the footing (17) of each sector (15) of the ring (12) and penetrate into tapped blind holes (26) formed in the thickness of the wheel rim (1) from the bottom (7a) of the drop center (7).

5. A runflat device according to claim 4, **characterized in that** the tapped blind holes (26) are machined obliquely in the thickness of the rim (1) to facilitate screw-fitting operations.

6. A runflat device according to any one of claims 3 to 5, **characterized in that** each sector (15) of the ring (12) is locked laterally by means of the fixing screws (22) and is locked vertically by means of the fixing screws (22) and by means of the groove (20) of the drop center (7).

7. A runflat device according to claim 3, **characterized in that** fixing screws (30) pass through tapped holes (32) machined laterally through the rim (1) and opening out into the drop center (7) so as to bear in clamped manner against the outer face of the beam portion of each sector (15) of the ring.

8. A runflat device according to claim 7, **characterized in that** the fixing screws (30) are dog-point screws.

9. A runflat device according to claim 7 or 8, **characterized in that** the inner flanges (17a) of the footings (17) of the sectors (15) of the ring bear against an O-ring (34) placed in the lateral groove (20) of the drop center (7).

10. A runflat device according to any one of claims 7 to 9, **characterized in that** each fixing screw (30) has an enlarged head (30a) which bears against the rim (1) via a sealing ring (36).

11. A runflat device according to claim 9 or 10, **characterized in that** each sector (15) of the ring (12) is locked laterally by the fixing screws (30) and the O-ring (34), and is locked vertically by means of the fixing screws (30) and by means of the lateral groove (20).

12. A runflat device according to claim 2, **characterized in that** the means for fixing the sectors (15) of the ring (12) on the rim (1) are constituted by a clamping belt (40).

13. A runflat device according to claim 12, **characterized in that** the clamping belt (40) is mounted in the drop center (7) to surround the outer flanges (17b) of the sectors (15) of the ring (12).

14. A runflat device according to claim 12 or claim 13, **characterized in that** the clamping belt (40) is made of a material such as rubber, for example, for its radially inner portion (41), and is covered by a metal tape (44) stuck thereto and of width that is narrower than that of the rubber portion (41) of the clamping belt (40).

15. A runflat device according to any one of claims 12 to 14, **characterized in that** the two free ends of the clamping belt (40) are united with each other by means of a toggle-action type locking device (42).

## Patentansprüche

1. Vorrichtung zum Fahren ohne Luft für ein Kraftfahrzeug, wobei diese Vorrichtung einen Ring (12) umfasst, welcher dazu bestimmt ist, im Inneren eines Luftreifens (P) auf einer einteiligen nicht-Standard-Radfelge (1) montiert zu sein, welche ein Felgenbett (7) und zwei, innere (3) und äußere (5), Kanten aufweist, wobei der Ring (12) aus wenigstens zwei Sektoren (15) realisiert ist, welche jeweils einen radial inneren Bereich (A) und einen radial äußeren Bereich (B) aufweisen, **dadurch gekennzeichnet, dass** die Sektoren (15) des Rings (12) unabhängig voneinander sind, und dass jeder Sektor (15) auf Höhe seines radial inneren Bereichs (A) an der Felge (1) befestigt ist.

2. Vorrichtung zum Fahren ohne Luft nach Anspruch 1, **dadurch gekennzeichnet, dass** der radial innere Bereich (A) von jedem Sektor (15) des Rings (12) durch eine Sohle (17) in Form eines Kreisbogens abgeschlossen ist, welche dazu bestimmt ist, sich an dem Boden (7a) des Felgenbetts (7) abzustützen, und dass die Sohle (17) zwei seitliche, innere (17a) und äußere (17b), Kanten aufweist, wobei die innere Kante (17a) in einer seitlichen Kehle (20) des Felgenbetts (7) aufgenommen wird, während die äußere Kante (17b), welche dem Profil des Felgenbetts (7) entspricht, mit den Mitteln zur Befestigung des Sektors (15) des Rings an der Felge zusammenwirkt.

3. Vorrichtung zum Fahren ohne Luft nach Anspruch 2, **dadurch gekennzeichnet, dass** jeder Sektor (15) des Rings mittels einer Schraube (22) an der Radfelge befestigt ist.

4. Vorrichtung zum Fahren ohne Luft nach Anspruch 3, **dadurch gekennzeichnet, dass** die Befestigungsschrauben (22) durch die äußere Kante (17b) der Sohle (17) von jedem Sektor (15) des Rings (12) verlaufen und in Gewindesacklöcher (26) eindringen, welche ausgehend von dem Boden (7a) des Felgenbetts (7) in die Dicke der Radfelge (1) eingearbeitet sind.

5. Vorrichtung zum Fahren ohne Luft nach Anspruch 4, **dadurch gekennzeichnet, dass** die Gewindesacklöcher (26) schräg in die Dicke der Felge (1) eingearbeitet sind, um die Schraubvorgänge zu erleichtern.

6. Vorrichtung zum Fahren ohne Luft nach einem der Ansprüche 3-5, **dadurch gekennzeichnet, dass** jeder Sektor (15) des Rings (12) seitlich mittels der Befestigungsschrauben (22) festgeklemmt ist und vertikal über die Befestigungsschrauben (22) und die Kehle (20) des Felgenbetts (7) festgeklemmt ist.

7. Vorrichtung zum Fahren ohne Luft nach Anspruch 3, **dadurch gekennzeichnet, dass** Befestigungsschrauben (30) durch Gewindelöcher (32) verlaufen, welche seitlich in der Felge (1) eingearbeitet sind und welche in das Felgenbett (7) münden, so dass sie in enge Anlehnung an der Außenseite des Trägers von jedem Sektor (15) des Rings kommen.

8. Vorrichtung zum Fahren ohne Luft nach Anspruch 7, **dadurch gekennzeichnet, dass** die Befestigungsschrauben (30) Ansatzschrauben sind.

9. Vorrichtung zum Fahren ohne Luft nach Anspruch 7 oder 8, **dadurch gekennzeichnet, dass** die inneren Ränder (17a) der Sohlen (17) der Sektoren (15) des Rings sich an einem O-Ring (34) abstützen, welcher in der seitlichen Kehle (20) des Felgenbetts (7) angeordnet ist.

10. Vorrichtung zum Fahren ohne Luft nach einem der Ansprüche 7-9, **dadurch gekennzeichnet, dass** jede Befestigungsschraube (30) einen vergrößerten Kopf (30a) aufweist, welcher sich über einen Dichtungsring (36) an der Felge (7) abstützt.

11. Vorrichtung zum Fahren ohne Luft nach Anspruch 9 oder 10, **dadurch gekennzeichnet, dass** jeder Sektor (15) des Rings (12) seitlich über die Befestigungsschrauben (30) und den O-Ring (34) festgeklemmt ist und vertikal über die Befestigungsschrauben (30) und durch die seitliche Kehle (20) festgeklemmt ist.

12. Vorrichtung zum Fahren ohne Luft nach Anspruch 2, **dadurch gekennzeichnet, dass** die Mittel zur Befestigung der Sektoren (15) des Rings (12) an der Felge (1) durch einen Klemmgurt (40) gebildet sind.

13. Vorrichtung zum Fahren ohne Luft nach Anspruch 12, **dadurch gekennzeichnet, dass** der Klemmgurt (40) in dem Felgenbett (7) angebracht ist, so dass er die äußeren Kanten (17b) der Sektoren (15) des Rings (12) umgibt.

14. Vorrichtung zum Fahren ohne Luft nach Anspruch 12 oder 13, **dadurch gekennzeichnet, dass** der Klemmgurt (40) realisiert ist aus einem Material wie z.B. Kautschuk für seinen radial inneren Teil (41) und bedeckt ist mit einem aufgeklebten Metallband (44), dessen Breite geringer ist als diejenige des Kautschukteils (41) des Klemmgurts (40).

15. Vorrichtung zum Fahren ohne Luft nach einem der Ansprüche 12-14, **dadurch gekennzeichnet, dass** die zwei freien Enden des Klemmgurts (40) miteinander mittels einer Arretiervorrichtung (42) vom Schnallenverschlusstyp verbunden sind.
